# EUROPEAN PATENT SPECIFICATION

(11) **EP 0 417 507 B1**
(45) Date of publication and mention of the grant of the patent: **08.05.1996**
(21) Application number: 90116025.9
(22) Date of filing: 22.08.1990
(51) Int. Cl.: G02B 6/38, G02B 6/32

(54) **Fiber optic connectors**
Optische Faser Verbinder
Connecteurs à fibre optique

(30) Priority: 05.09.1989 US 403097
(43) Date of publication of application: 20.03.1991
(73) Proprietor: LABINAL COMPONENTS AND SYSTEMS, INC., Elk Grove Village Illinois 60007 (US)
(72) Inventor: Cabato, Nellie L., Plymouth Meeting, Pennsylvania 19462 (US); Tabb, LeRoy, Doylestown, Pennsylvania 18901 (US); Volinic, Nicholas, St. Paul, Minnesota 55116 (US); Wesson, Laurence N., Blue Bell, Pennsylvania 19422 (US)
(74) Representative: Hoeger, Stellrecht & Partner

(56) References cited:
- FR-A- 2 413 674
- GB-A- 2 180 955
- GB-A- 2 210 994
- US-A- 4 133 601
- PATENT ABSTRACTS OF JAPAN, vol. 9, no. 199 (P-380)[1922], 16th August 1985; & JP-A-60 63 506

## Description

The present invention relates to a fiber optic terminus assembly comprising a resilient fiber gripper element of a material which has a high coefficient of friction with the material of an optical fiber received by a centrally disposed aperture of said gripper element being in direct surface to surface contact with the surface of an exposed portion of said optical fiber and further comprising a metal support element surrounding said gripper element and said exposed portion of the optical fiber within the centrally disposed aperture thereof, said support element forming a unitary continuous annulus around said gripper element and said exposed fiber portion, being formed of a hard material having a low coefficient of elasticity and including at least a part thereof which is inelastically deformed inwardly to effect compressive engagement with said gripper element and thereby compressing said gripper element into gripping engagement with said exposed portion of the optical fiber for retaining the same in a predetermined position relative to said support element.

The invention further relates to a method of forming a terminus assembly for an optical fiber provided with covering layers , comprising the steps of
removing the covering layers from an end portion of said optical fiber to provide an exposed portion of said optical fiber,
providing a fiber support element having a cavity therethrough, and
providing a gripper element formed of a compressible material and having an opening therethrough for engagement upon said exposed portion of said fiber,
providing said support element of a hard deformable metal having a low coefficient of elasticity,
selecting an elastic material for said gripper element having a high coefficient of friction with said exposed portion of said fiber,
positioning said gripper element in said cavity of said support element, and
threading said exposed portion of said fiber through said gripper element,
crimping at least a portion of said support housing element circumjacent said gripper element to inelastically deform said portion and thereby compress said gripper element into firm resilient surface-to-surface contact with said exposed portion of said fiber previously threaded therein for retaining said fiber in position in said terminus assembly.

A fiber optic terminus assembly of this type as well as a method of forming such a terminus assembly are known from DE-A-25 31 994. In this known terminus assembly a tubular or U-shaped sleeve made of a material which can be permanently deformed by pressure is used to compressively hold an internal lining or sleeving of a deformable material about a fiber end.

Further, US-A-4,593,970 discloses a fiber optic feedthrough module which comprises a metal sleeve which is deformed by swaging, so as to compress elastically deformable sealant bodies about a fiber optic element. However, in this known module the metal sleeve comprises grooves for obtaining axial sections of reduced wall thickness, which upon swaging are bulged outwardly in the course of deforming the tube by the deformable sealant bodies inserted into said tube.

Further, a fiber optic terminus assemblies of a more conventional type are known from FR-A-2 413 674 and GB-A-2 180 955, respectively.

According to the first one of these two documents an optical fiber is secured to a support element by means of an elastically deformable plug-like gripper element having a central through hole and a frusto conical outer surface for cooperation with a cylindrical inside wall of the support element.

Further, GB-A-2 180 955 cited above in the second place discloses a terminal assembly wherein the support element in a similar manner comprises an axial cavity for receiving an elastomeric fiber holder or gripper element having a through hole for receiving an optical fiber.

Specifically, the invention relates to connectors for providing the mechanical and optical interconnection between optical fibers. More particularly, the invention relates to a fiber optic terminus that provides strain relief for the fiber portion as well as surrounding strength layers of the cable and that self-aligns the end of the fiber portion within a focal zone in a lens-type connection. The terminus of the present invention is relatively simple in construction, and is simple to install while being effective in operation.

Generally, the use of fiber optics as a transmission medium provides communication of data at high speeds, great reliability, and relatively low cost. However, the installation and maintenance requirements of fiber optic networks have posed practical difficulties. Principal among these difficulties is the interconnection of pairs of fiber optic cables. Typically, fiber optic termini require precise alignment between two extremely small fiber cores in order to provide low-loss signal transmission. Alternatively, a lens arrangement may be placed between the two fibers, but precise alignment and axial positioning over a wide range of environmental conditions are still necessary. With either mode of connection, it is important to capture the fiber end at a closely controlled location, because the position of the fiber end, relative to either the other fiber end or to a lens, has a critical impact on the efficiency of the optical interconnection.

Fiber optic connectors in general are very susceptible to longitudinal forces on the fiber. Retention of the fiber forming the interconnection is therefore another frequent problem. Each fiber must be secured to prevent relative movement of the fibers since virtually any movement will adversely effect the quality of the interconnection. The physical attachment of the fiber, however, must avoid the application of undue stress on the fiber, which may cause microbend attenuation or, possibly, eventual breakage of the fiber due to stress fatigue. Further, the fiber ends must be kept clean and protected, both in the mated condition and in the open, unmated position. The fiber core sizes which are typically of interest, usually 50 to 200 µm (microns), necessitate attention to the control of dirt and field cleanability.

Known fiber optic connectors usually employ the coupling of the ends of two connecting fibers. The ends of the fibers are glued or otherwise secured into ferrule subassemblies which are then brought into actual or virtual contact within a common alignment sleeve. Such connectors, however, tend to fail when the glue or adhesive employed to secure the fibers degrades after extended use. Further, such connectors tend to misalign upon the application of rotational, longitudinal or lateral forces.

Other types of fiber optic connectors, including known lens types, while they perform satisfactorily under certain circumstances, are overly complex and difficult to install and maintain. The assembly of complex mechanical parts associated with such connectors involves considerable wasted effort owing to aligning the fiber within the connector and completing the mechanical connection of the cable. Moreover, such complex systems typically suffer breakdowns after extended periods of use.

Therefore, it is an object of the present invention to provide an improved fiber optic terminus. More specifically, it is an object of the present invention to provide a novel mode for capturing an optical fiber against the forces that tend to displace it.

In a fiber optic terminus assembly of the type indicated at the outset this object according to the present invention is accomplished in that it comprises a first terminus assembly of an optical fiber connector which provides a first reference surface, in that the support element includes a second reference surface for abutting the first reference surface and in that the fiber has a terminal end spaced at a predetermined distance from the second reference surface of the support element

Regarding the method of making a terminus assembly of the type indicated at the outset the above object is accomplished by the step of separating a strength layer of a fiber optic cable from an end portion of the fiber to provide an exposed portion thereof and positioning the same around a tail section of said support element, the step of positioning a sleeve around the tail section and the overlying portion of the strength layer and finally the step of inwardly deforming said sleeve to compressively engage the strength layer on the tail section.

A preferred embodiment of the terminus assembly of the present invention provides a fiber optic terminus having separate locations for securing the fiber core and the surrounding strength layer of a fiber optic cable, especially a fiber optic terminus which is self aligning upon completion of the interconnection between two fiber cores.

It is an advantage of the present invention that it provides a fiber optic terminus that may be easily installed, even with hand tools, requiring far less time than known termini, yet which provides good gripping of the fiber and accurate positioning of the fiber end and also maintains a high degree of stress relief engagement with the cable.

It is another advantage of the present invention that it provides a fiber optic terminus that is durable and reliable.

It is a further advantage of the present invention that it provides fiber optic termination within a small profile such as within a space normally providing a conventional electrical contact.

Generally, the objects of the present invention are accomplished in a terminus that provides one half of an optical connection in a lens type arrangement by securing a fiber optic cable at its fiber and its surrounding strength layer. To effect the termination, at least a portion of the strength layer is removed from the fiber. A novel compressible ferrule is placed between the exposed fiber and the removed strength layer and includes a head section having a reference surface at its distal end and a serrated tail section. The ferrule includes a compressible fiber gripping insert having a centrally disposed aperture that receives the exposed fiber. Advantageously, the head section surrounds the insert and is crimped around the insert directly on the fiber to securely grip the fiber. The strength layer is placed between the serrated portion of the ferrule and the inner surface of a compressible sleeve member. The strength layer is thereafter backfolded over the outer surface of the sleeve member. The fiber is then cleaved to length, as by an appropriate tool. A terminus body including an annular end section is advanced over the assembly including the ferrule, insert, sleeve, and cable. In accordance with an important feature of the invention, the terminus body includes a reference stop which is positioned at a preselected distance from a lens surface. When the body is crimped in place, the ferrule reference surface abuts the reference stop, thereby aligning the fiber end at a known distance from the lens surface.

While the invencion disclosed herein has been described primarily with reference to termini for interconnection of a pair of fibers, it is understood that it is within the scope of the invention to provide termini having an array of locations for interconnecting multiple fibers which incorporates the same novel features. Further, while the terminus of the present invention will be described herein as generally cylindrical, it will be understood that other geometrical configurations may be utilized.

### Brief Description of the Drawings

Fig. 1 is a detailed cross sectional view of a fiber optic terminus subassembly employing teachings of the present invention.

Fig. 2 is a detailed cross sectional view of the subassembly of Fig. 1 mating within an outer contact body to form a fiber optic pin terminus.

Fig. 3 is an exploded perspective view of the ferrule and gripping insert of Fig. 1.

Fig. 4 is a cross sectional view of a pin terminus assembly for forming one half of an optical fiber termination, as in Fig. 1 but without the optical fiber cable.

Fig. 5 is an exploded cross sectional view of the pin assembly of Fig. 4.

Fig. 6 is a cross sectional view of a corresponding complementary socket assembly which mates with the pin assembly of Fig. 4 to form a fiber optic termination employing the present invention.

Fig. 7 is an exploded cross sectional view of the socket assembly of Fig. 6.

### Detailed Description of the Preferred Embodiment

The following detailed description will permit a more complete understanding of this invention. However, the embodiments described below are simply examples of the invention and the invention is not limited to these embodiments. Furthermore, the drawings are not necessarily to scale. In certain instances, details may have been omitted which are not necessary for an understanding of the present invention.

Generally, the present invention relates to a terminus for interconnecting a pair of fiber optic cables. The device of this invention is intended to be used in the type of optical terminating arrangement using a lens expanded beam system wherein a first lens is employed to capture and collimate the light emerging from one fiber and project the light to a second lens. The second lens receives the light and refocuses the light on a receiving fiber.

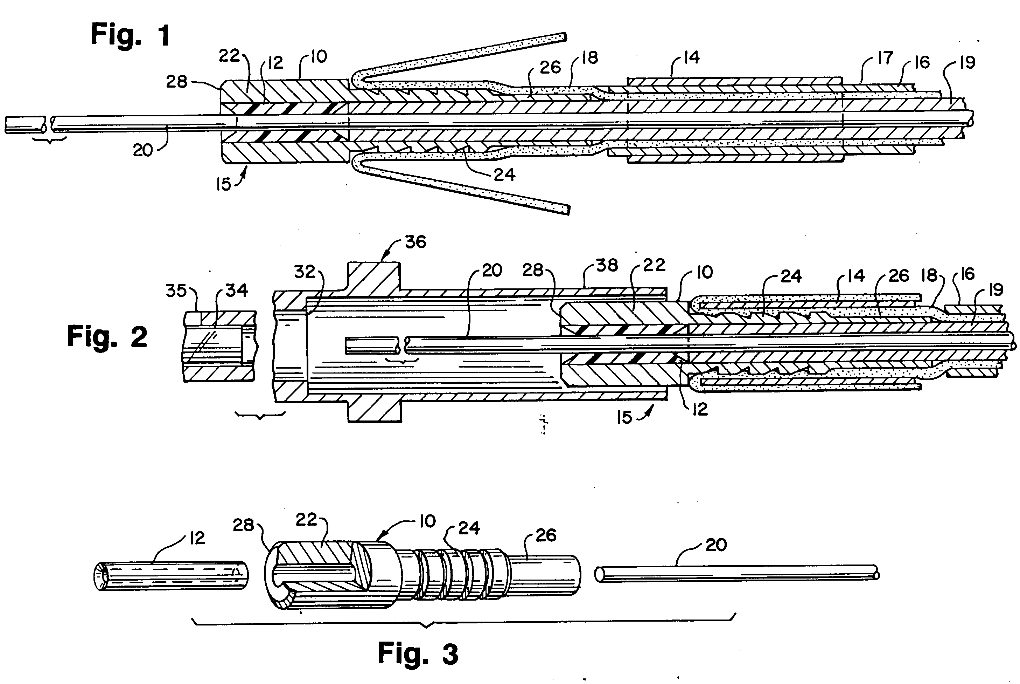

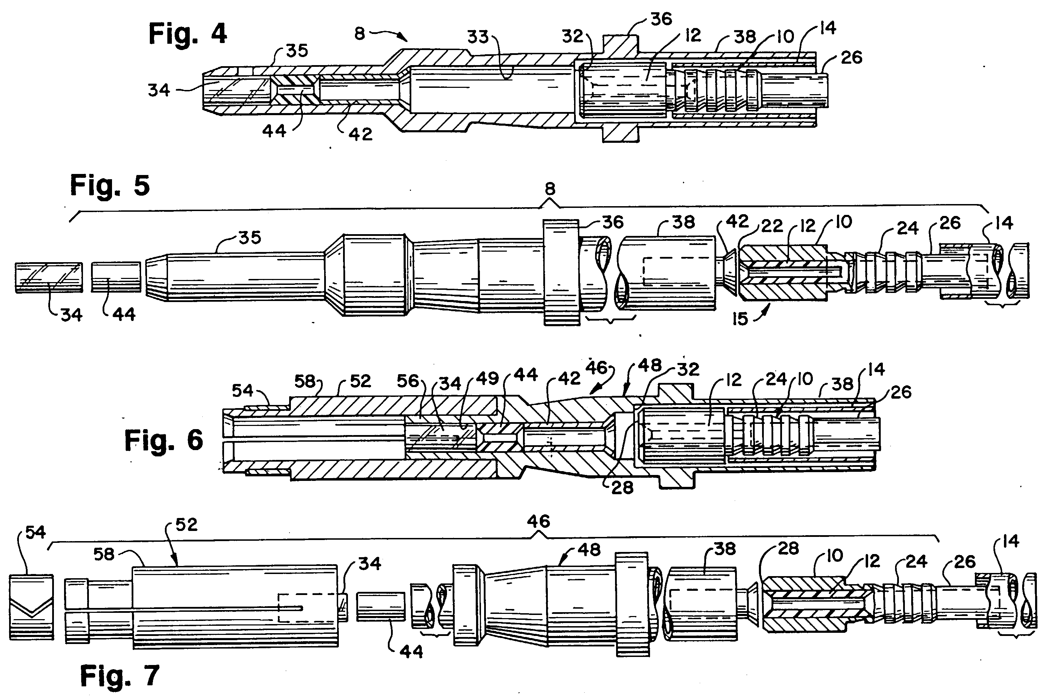

Turning first to Fig. 4 and also to Fig. 5, therein are shown the assembled components of a pin terminus assembly 8 for forming one half of a fiber optical connection. The pin terminus 8 includes a buffer ferrule 10 and gripping insert 12, and a crimp sleeve 14, for forming a subassembly 15 which is further illustrated in Figs. 1-3. As discussed further below, the terminus 8 also includes an outer terminus body 36, a lens 34, an alignment sleeve 42 and a fiber guide 44.

Turning now to Fig. 1, the fiber optic connector 8 has a particular application for use with a fiber optic cable 17 having a fiber portion 20 which transmits and receives optical waves, an inner jacket layer 19, an intermediate strength layer 18 that encloses the fiber portion 20 and the inner jacket layer 19, and an outer layer 16. Typically, the intermediate strength layer 18 of the cable 17 is formed of a durable material. For example, the strength layer 18 may be fabricated of braided Kevlar or fiberglass to minimize stress on the fiber. The fiber portion in the illustrated embodiment is a single cylindrical fiber having, for example, a diameter of 140 or 250 microns.

As is shown in Fig. 1 and also in Fig. 3, the ferrule 10 is formed with a head portion 22 including an end surface 28 that provides a reference plane for the buffer ferrule subassembly 15 as will be noted further below, and a tail section 26 which includes a serrated gripping portion 24. The tail section 26 interfits between the strength layer 18 and the inner jacket layer 19 of the fiber optic cable 17 when the end portion of the strength layer 18 is removed or loosened from the fiber portion 20.

It has been found that use of a deformable metal of low elasticity for the ferrule 10 permits crimping engagement of the ferrule head 22 onto the insert 12 and the encompassed fiber adequately to assure firm engagement without undue risk of crushing or overstressing the fiber during the crimping step.

The buffer ferrule subassembly 15 also includes the annular gripping insert 12, best shown in Figs. 1-3, placed within the head portion 22 of the ferrule 10. The buffer ferrule 10 and the gripping insert 12 are crimped directly onto the fiber portion 20 in order to effectuate a suitable connection. Preferably, the gripping insert 12 is fabricated of polyethersulfone (PES) and the coatings on the engaged portion of fiber are removed to provide a bare glass fiber engagement portion of the fiber prior to assembly. This has been found to provide an excellent gripping action over a wide operating range of temperatures between minus 55°C to well over 200°C. Other materials may be substituted in place of PES provided they have a high coefficient of friction on the fiber and are formable and suitably resilient.

Advantageously, the gripping insert 12 permits minimized pistoning and vibration of fiber portion 20. For example, when such a buffer ferrule 10 is crimped onto such an insert about 1.6 mm (1/16") long and the enclosed fiber portion in the manner described herein, the insert 12 resists tension on the engaged fiber portion 20, e.g. up to approximately two pounds of force on the engaged fiber portion 20. Such a retention force is adequate for maintaining the optical fiber in position against forces typically encountered in thermal cycling and vibration. The buffer ferrule subassembly 15, however, must not transfer too great a compressive force to the optical fiber 20 to avoid the problem of crushing or otherwise overstressing the glass fiber.

It has been found that the buffer ferrule 10 may be fabricated of stainless steel of high hardness, e.g. a Rockwell B scale of 92-95 to minimize elasticity and obtain a high degree of strength when compressively deformed onto the insert 12 and encompassed fiber by crimping.

As best shown in Fig. 2, the crimp sleeve 14 is placed in surrounding relation to the strength layer 18 over the serrated gripping portion 24 of the buffer ferrule 10 to "tie off" the strength layer 18. The sleeve 14 preferably is formed of a metal or a similar material which, like the buffer ferrule 10, is non-elastically deformable to effect crimping retention of the enclosed layers. Thus, when the sleeve 14 is thereafter compressed, the strength layer 18 is securely held between the serrated portion 24 and the sleeve 14. In the preferred embodiment, the sleeve 14 and outer body 36 are also fabricated of a stainless steel, e.g., 302 EZ or 303, hardness not being as significant for these components.

The end surface 28 serves as a reference plane or surface for determining the plane of cleaving the fiber 20 after the fiber is gripped in the subassembly 15.

Figs. 2 and 5 also show the outer body 36 of the pin terminus 8, which has a cavity therethrough to receive the various components. The outer body 36 includes an annular sleeve portion 38 that forms a receptacle to receive the ferrule subassembly 15 and respective gripped fiber portion 20 of the cable 17. The outer terminus body 36 also includes a central bore portion 33, a pin end portion 35 and a reference stop surface 32 located at a predetermined distance from the inwardly disposed proximal surface of a lens 34 which is mounted within the outer pin end portion 35. In the preferred embodiment, the lens 34 may be either a gradient index rod lens or a precision ball lens. When the ferrule subassembly is mated within the outer terminus body 36, the end reference surface 28 of the buffer ferrule 10 abuts the reference stop surface 32 of the terminus body 36. The reference surface 28 thereby serves as a reference surface both for cleaving the end of the fiber 20 and for positioning the fiber cable 17 and the ferrule assembly 15, which results in highly accurate positioning of the end of the fiber 20 relative to the lens 34.

Thus, simply by cleaving the fiber portion 20 of the fiber optic cable 17 at an appropriate predetermined distance from the reference end surface 28 of the buffer ferrule 10 in the subassembly stage, the end of the fiber portion 20 will be precisely positioned within the focal zone of the lens 34 when the terminus is assembled. Such alignment is necessary to obtain an efficient optical interconnection.

After the entire ferrule and cable assembly 15 is placed within the annular sleeve portion 38 of the outer terminus body 36, the annular portion 38 is crimped to clamp the underlying layers of the strength material 18 and the sleeve 14 onto the serrated portion 24 of the ferrule 10, with corresponding crimp deformation also of the sleeve 14. This arrangement provides strong strain relief retention for the cable to the terminus housing 36 on the order of approximately 50 pounds. The resulting strong mechanical interconnection of the strength member 18 between the ferrule 24 and the terminus body 36 provides strain relief against external forces on the cable being imposed on the fiber, such as tension forces and vibrational forces. Thus, this strong interconnection fixes the subassembly 15 in position as with the reference surfaces 28 and 32 in abutment with one another, to maintain the cleaved end of the fiber in its desired position relative to the lens 34 despite external stresses transmitted through the cable or the housing 36.

It will be appreciated that another advantage of the present invention is that a defective termination of the fiber cable 17 results in a minimum loss of componentry. Since the outer body 36 of pin terminus 8 is mated with the ferrule and cable assembly after termination of the fiber cable 17, any shortcomings in the mechanical or optical termination of fiber cable 17 result only in the loss of ferrule 10 and not in the loss of the entire pin terminus 8.

Lateral alignment of the fiber portion 20 in connection with the lens 34 is provided by a precision fiber guide 44 which fits within the pin section 35 adjacent the lens 34. The fiber guide 44 may, for example, be fabricated of sapphire or ceramic. The alignment advantages of such material will be appreciated by those skilled in the art. Adjacent the fiber guide 44 is the alignment sleeve 42 which also is mounted in the pin end portion 35. The alignment sleeve 42 mechanically secures the fiber guide 44 in proper alignment and also provides a passive guide for the fiber portion 20 entering the alignment sleeve 42.

The pitch of the lens 34 is chosen so that the fiber portion 20 must be a small distance from the lens 34 in order for the image to be properly focused. One important advantage of this arrangement is that the fiber portion 20, when cleaved, never comes in contact with the lens 34. Damage to the lens 34, either during termination of the fiber optic cable 17 or during subsequent environmental or mechanical stress, is thereby avoided.

The other half of the optical interconnection is provided by a socket terminus assembly 46, shown in Figs. 6 and 7 which is generally similar to the aforedescribed pin terminus in the manner of engaging the respective optical fiber and cable, but with appropriate modifications in the outer housing portions for complementary mating with a pin terminus 8. The socket assembly 46 includes an outer body 48 which is similar to the body 36 of the pin terminus 8, but modified in certain respects to a socket configuration for its mating engagement with the pin terminus 8. Thus, it also receives an alignment sleeve 42, fiber guide 44 and lens 34 within its socket bore 49. The fiber and cable are gripped in the same manner in an identical subassembly 15. Thus, as with pin assembly 8, socket assembly 46 includes a buffer ferrule 10, insert 12 and a crimp sleeve 14. The location and operation of these elements are the same as described in connection with pin assembly 8.

A coupler sleeve 52 and "napkin" or clamping ring 54 are provided for joining the pin and socket connectors 8 and 46. The coupler sleeve 52 is pre-fitted over a cylindrical end portion 56 of socket assembly 46 and includes a resilient split barrel portion 58 to receive the cylindrical pin end section 35 of the pin assembly 8, to provide a mating interconnection between socket assembly 46 and pin assembly 8. The ring 54 is thereafter compressed over the end of the coupler sleeve which engages connector 8 to conveniently secure this interconnection. When the coupler sleeve 52 is in place, the interconnection provides lateral and angular alignment of the two termini 8 and 46 and thus of the mating fibers. The telescopic connection afforded by the coupler sleeve allows for variations in the relative longitudinal positions of the termini 8 and 46, such as may be attributable to tolerances in the connectors in which the termini are supported.

While particular outer shapes for the housings 36 and 46 are disclosed, a variety of different termini housing shapes may be provided. The outer geometry of the termini will, of course, be dictated by constraints of the various interconnecting housings depending on the particular application. By employing the teachings of the present invention, the termini may fit within a small profile, such as for fitting within the envelope of space allowed for a conventional electrical contact, as in a hybrid connector.

To effect termination of an optical fiber in either terminus, the respective sleeve 14 is first pre-positioned over the outer layer 16 of the fiber optical cable 17. The outer layer 16 of the cable 17 is removed from the distal end portion of the cable 17. The strength layer 18 is thereafter pulled away from the inner jacket 19. The inner jacket 19 is removed from the fiber to expose a bare portion of the optical fiber 20 and the fiber is preferably cleaned of any remaining coating.

The buffer ferrule subassembly, including the ferrule 10 and gripping insert 12, is then assembled directly onto the cable, with the serrated gripping portion 24 and the tail portion 26 sliding over the inner jacket 19 until the tail portion 26 abuts an unremoved portion of the strength layer 18. In this operation, the fiber portion 20 is threaded through the insert 12 in the buffer end 22. It has been found that preparation of the fiber surface with a chemical agent may enhance the fiber strength and improve the engagement of the gripping insert 12. The head portion 22 of the buffer ferrule 10 is then crimped or otherwise compressed radially inward to compress the insert 12 against the exposed fiber portion 20 for gripping the fiber. The dimensions and conditions of the insert 12 preferably are controlled such that the insert 12 does not project from the end of the ferrule 10. Some elongation of the insert 12, particularly along the fiber surface 20, will typically occur. Once the buffer ferrule 10 is crimped onto the fiber portion 20, the end reference surface 28 of the ferrule 10 provides a reference plane relative to the gripped fiber for subsequent operations. These include scribing and cleaving the fiber at a fixed predetermined distance from the end surface 28 which take place after the strength layer is secured to the ferrule 10.

Thereafter, the strength layer 18 is urged forward over the buffer ferrule 10. The crimp sleeve 14 is advanced over the serrated gripping portion 24 of the ferrule 10, and the outer ends of the strength layer 18 are folded back over the outer surface of the crimp sleeve 14, as best seen in Fig. 2.

The assembled fiber and ferrule assembly is then advanced within the annular sleeve 38 of the outer terminus body 36. This fiber and ferrule assembly is advanced until the reference surface 28 abuts a reference stop surface 32 in the terminus body 36. This operation precisely positions the end of the fiber portion 20 within the focal zone of the lens 34. The annular portion 38 of the terminus body which surrounds the sleeve 16 and respective portions of the strength elements 18 is then crimped or otherwise deformed inward to clamp the underlying layers of the strength material 18 and the sleeve 14 onto the ferrule gripping portion 24 for strain relief retention of the fiber contact assembly. In this arrangement, the two layers of the strength material 18 are clamped between the metal layers 24, 14, and 36.

From the description thus far provided, a fiber optic connector that meets the aforestated objectives by providing a simple crimp and cleave assembly without the use of epoxies or other fillers has been described. It will be apparent that the proposed fiber optic connector may be used in a number of applications and that a number modifications can be made in the invention disclosed, particularly by those having the benefit of the foregoing teachings, without departing from the spirit of these principles. For example, it will be understood that the mode of crimping and engaging the fiber portion 20 in the buffer ferrule subassembly 15 may be utilized in assemblies where there is no joinder of the strength layer 18 to the ferrule 10, for example where the individual fibers are part of a multi-fiber cable having a single strength layer which is secured to other components of a connector. Also, the stress relief gripping arrangement may be utilized with other fiber holders. However, these features preferably are utilized together in the advantageous assembly described herein. Accordingly, while the invention disclosed herein has been described with reference to the presently contemplated best mode for practicing the invention, it is intended that this invention be limited only by the scope of the appended claims.

## Claims

1. A fiber optic terminus assembly (15) comprising a resilient fiber gripper element (12) of a material which has a high coefficient of friction with the material of an optical fiber (20) received by a centrally disposed aperture of said gripper element (12) being in direct surface to surface contact with the surface of an exposed portion of said optical fiber (20) and further comprising a metal support element (10) surrounding said gripper element (12) and said exposed portion of the optical fiber (20) within the centrally disposed aperture thereof, said support element (10) forming a unitary continuous annulus around said gripper element (12) and said exposed fiber portion, being formed of a hard material having a low coefficient of elasticity and including at least a part (22) thereof which is inelastically deformed inwardly to effect compressive engagement with said gripper element (12) and thereby compressing said gripper element (12) into gripping engagement with said exposed portion of the optical fiber (20) for retaining the same in a predetermined position relative to said support element (10), said terminus assembly (15) being characterized in that it comprises a first terminus assembly of an optical fiber connector (8, 46) which provides a first reference surface (32), in that the support element (10) includes a second reference surface (28) for abutting the first reference surface (32) and in that the fiber (20) has a terminal end spaced at a predetermined distance from the second reference surface (28) of the support element (22).

2. The assembly according to claim 1 wherein said optical fiber (20) is formed of glass and said gripper element (12) is composed of polyethersulfone.

3. The assembly according to claim 1 or 2 wherein said support element (10) is composed of stainless steel.

4. The assembly according to claim 1 wherein said gripper element (12) is a unitary continuous sleeve surrounding said exposed portion of said fiber (20), and said support element (10) is a unitary continuous sleeve portion surrounding said gripper element (12).

5. The assembly according to claim 1 wherein said optical fiber (20) is an element of a fiber optic cable (17) wherein said optical fiber (20) is surrounded substantially along its length by a covering (16, 18, 19) including a strength layer with at least a portion of said covering (16, 18, 19) being removed from said fiber (20) so as to form said exposed portion of said fiber (20) projecting beyond said covering (16, 18, 19).

6. The assembly according to claim 5, wherein said support element is a ferrule (10) having a radially deformable head portion (22) as said deformable part thereof with a reference and abutment surface (28) at its one end and a tail section (26) for placement between said fiber (20) and at least one overlaying layer (18) of said covering (16, 18, 19).

7. The assembly according to claim 6 further including a deformable sleeve member (14) positioned in surrounding relation to said at least one overlying layer (18) and that tail section (26).

8. The assembly according to claim 7 being further characterized in that it includes a body (36) which has a cavity therethrough and a compressible annular portion (38) for surrounding and compressibly engaging upon the assembled tail portion (26), deformable sleeve member (14) and overlying layer (18).

9. The assembly according to claim 8 wherein the outer body (36) includes a further abutment surface (32) which is engaged by the support element (10), said outer body (36) forming a first mating means which also positiones a second mating element (34).

10. The assembly according to claim 1 wherein said fiber connector (8, 46) includes a further mating optical element (34) spaced a predetermined distance from the first reference surface (32).

11. The assembly according to claim 10 wherein said further mating element is a lens (34).

12. The assembly according to claims 1 and 10 wherein the predetermined distances are substantially equal to one another.

13. The terminus assembly according to claim 1 wherein said optical fiber connector (8, 46) comprises a pin terminus assembly (8) and a socket terminus assembly (46) each having a lens (34), with one terminus assembly (46) including a body portion (coupler sleeve 52) for engaging the body (pin end section 35) of the other terminus assembly (8) to align their lenses (34) so that light emerging from the fiber (20) of one terminus assembly (8) may be projected from the lens (34) into the lens and fiber assembly (34, 20) of the other terminus assembly (46).

14. The terminus assembly according to one of claims 1 to 12 wherein said optical fiber (20) is free of covering and coating.

15. A method of forming a terminus assembly (15) for an optical fiber (20) provided with covering layers (16, 18, 19), comprising the steps of
removing the covering layers (16, 18, 19) from an end portion of said optical fiber (20) to provide an exposed portion of said optical fiber,
providing a fiber support element (10, 22, 26) having a cavity therethrough, and
providing a gripper element (12) formed of a compressible material and having an opening therethrough for engagement upon said exposed portion of said fiber (20),
providing said support element (10) of a hard deformable metal having a low coefficient of elasticity,
selecting an elastic material for said gripper element (12) having a high coefficient of friction with said exposed portion of said fiber (20),
positioning said gripper element (12) in said cavity of said support element (10), and
threading said exposed portion of said fiber (20) through said gripper element (12),
crimping at least a portion (22) of said support housing element (10) circumjacent said gripper element (12) to inelastically deform said portion (22) and thereby compress said gripper element (12) into firm resilient surface-to-surface contact with said exposed portion of said fiber (20) previously threaded therein for retaining said fiber (20) in position in said terminus assembly (15), said method being characterized by the step of separating a strength layer (18) of a fiber optic cable (17) from an end portion of the fiber (20) to provide an exposed portion thereof and positioning the same around a tail section (26) of said support element (10), the step of positioning a sleeve (14) around the tail section (26) and the overlying portion of the strength layer (18) and finally the step of inwardly deforming said sleeve (14) to compressively engage the strength layer (18) on the tail section (26).

16. The method according to claim 15 wherein another portion of the strength layer (18) is folded over the sleeve (14), wherein a further annular terminus portion (38) is positioned around said further portion of the strength layer (18), the sleeve (14) and the tail section (26) and wherein the outer anular terminus body portion (38) is inelastically deformed onto the components (18, 14, 26) disposed therewithin.

17. The method according to claim 15 wherein said fiber (20) is formed of glass and said gripper element (12) is composed of polyethersulfone.

18. The method according to one of claims 15 to 17 wherein said support element (10) is composed of stainless steel.

## Patentansprüche

1. Anschlußanordnung (15) für optische Fasern, umfassend:
ein elastisches Fasergreifelement (12) aus einem Material, welches einen hohen Reibungskoeffizienten bezüglich des Materials einer optischen Faser (20) aufweist, welche von einer zentral angeordneten Öffnung in dem Greifelement aufgenommen wird, das in direktem Oberflächenkontakt mit der Oberfläche eines freigelegten Bereichs der optischen Faser (20) steht, und ferner umfassend: ein metallisches Stützelement (10), welches das Greifelement (12) und den in der zentral angeordneten Öffnung desselben befindlichen freigelegten Bereich der optischen Faser (20) umschließt, wobei das Stützelement (10) rings um das Greifelement (12) und den freigelegten Bereich einen einheitlichen, kontinuierlichen Ring bildet, der aus einem harten Material besteht, welches einen niedrigen Elastizitätskoeffizienten besitzt und mindestens ein Teilstück (22) umfaßt, welches unelastisch nach innen verformt ist, um mit dem Greiferelement (12) unter Ausübung einer Kompressionskraft in Eingriff zu stehen und dadurch das Greiferelement (12) derart zusamenzudrücken, daß dieses den freigelegten Bereich der optischen Faser (20) greifend erfaßt, um diese bezüglich des Stützelements (10) in einer vorgegebenen Position zu haltern,
wobei die Anschlußanordnung (15) dadurch gekennzeichnet ist, daß sie eine erste Anschlußanordnung eines Verbinders (8, 46) für optische Fasern bildet, welcher eine erste Bezugsoberfläche (32) bereitstellt, daß das Stützelement (10) eine zweite Bezugsfläche (28) zum Abstützen an der ersten Bezugsfläche (32) aufweist und daß die Faser (20) ein Anschlußende aufweist, welches in einem vorgegebenen Abstand von der zweiten Bezugsfläche (28) an dem Stützelement (22) angeordnet ist.

2. Anordnung nach Anspruch 1, dadurch gekennzeichnet, daß die optische Faser aus Glas hergestellt ist und daß das Greifelement (12) aus Polyethersulfon besteht.

3. Anordnung nach Anspruch 1 oder 2, dadurch gekennzeichnet, daß das Stützelement (10) aus rostfreiem Stahl besteht.

4. Anordnung nach Anspruch 1, bei der das Greifelement (12) eine einheitliche, kontinuierliche Buchse ist, die den freigelegten Bereich der Faser (20) umgibt, und daß das Stützelement (10) eine einheitliche, kontinuierliche Buchse ist, die das Greifelement (12) umgibt.

5. Anordnung nach Anspruch 1, bei der die optische Faser (20) ein Element eines faseroptischen Kabels (17) ist, in dem die optische Faser (20) im wesentlichen auf ihrer gesamten Länge von einer Hülle (16, 18, 19) umgeben ist, welche eine Verstärkungsschicht umfaßt, wobei mindestens ein Teil der Hülle (16, 18, 19) derart von der Faser (20) entfernt ist, daß der freigelegte Bereich der Faser (20) gebildet wird, der über die Hülle (16, 18, 19) vorsteht.

6. Anordnung nach Anspruch 5, bei der das Stützelement ein Endring (10) ist, welcher als ein verformbares Teilstück einen radial verformbaren Kopfteil (22) mit einer Bezugs- und Stützfläche (28) an seinem einen Ende aufweist und welcher ein Endstück (26) zum Anordnen zwischen der Faser und mindestens einer darüber liegenden Schicht (18) der Hülle (16, 18, 19) aufweist.

7. Anordnung nach Anspruch 6, welche ferner ein verformbares Hülsenelement (14) aufweist, welches bezüglich der mindestens einen darüber liegenden Schicht (18) und des Endstücks (26) derart angeordnet ist, daß es diese Teile umgibt.

8. Anordnung nach Anspruch 7, welche ferner dadurch gekennzeichnet ist, daß sie einen Körper (36) umfaßt, welcher einen durchgehenden Hohlraum und einen kompressiblen, ringförmigen Teil (38) aufweist, um die zusammengebaute Anordnung aus dem Endstück (26), dem deformierbaren Hülsenelement und der über dem Endstück liegenden Schicht (18) zu umgeben und unter Ausübung von Kompressionskräften zu erfassen.

9. Anordnung nach Anspruch 8, bei der der äußere Körper (36) eine weitere Stützfläche (32) umfaßt, welche von dem Stützelement (10) erfaßt wird, wobei der äußere Körper (36) eine erste fluchtende Einrichtung bildet, welche auch ein zweites fluchtenden Element (34) positioniert.

10. Anordnung nach Anspruch 1, bei der der Faserverbinder (8, 46) ein weiteres fluchtendes optisches Element (34) umfaßt, welches in einem vorgegebenen Abstand von der ersten Bezugsfläche (32) angeordnet ist.

11. Anordnung nach Anspruch 10, dadurch gekennzeichnet, daß das weitere fluchtende Element eine Linse (34) ist.

12. Anordnung nach Anspruch 1 und 10, dadurch gekennzeichnet, daß die beiden vorgebenen Abstände im wesentlichen gleich sind.

13. Anschlußanordnung nach Anspruch 1, bei der der Verbinder (8, 46) für eine optische Faser eine Stecker-Anschlußanordnung (8) und eine Fassungs-Anschlußanordnung (46) umfaßt, die jeweils eine Linse (34) besitzen, wobei die eine Anschlußanordnung (46) ein Körperelement (Kupplungsbuchse 52) zum Erfassen des Körpers (steckerseitiger Anschluß 35) der anderen Anschlußanordnung (8) umfaßt, um die Linsen (34) derart auszurichten, daß das aus der Faser (20) der einen Anschlußanordnung (8) austretende Licht von der (zugehörigen) Linse (34) in die Linsen- und Faseranordnung (34, 20) der anderen Anschlußanordnung (46) projizierbar ist.

14. Anschlußanordnung nach einem der Ansprüche 1 bis 12, bei der die optische Faser (20) frei von einer Hülle und einer Beschichtung ist.

15. Verfahren zum Herstellen einer Anschlußanordnung (15) für eine optische Faser (20), die mit Abdeckschichten (16, 18, 19) versehen ist, welches die (folgenden) Schritte umfaßt:
Die Abdeckschichten (16, 18, 19) werden von einem Endbereich der optischen Faser (20) entfernt, um einen freiliegenden Bereich der optischen Faser bereitzustellen; es wird ein Faserstützelement (10, 22, 26) bereitgestellt, welches einen durchgehenden Hohlraum aufweist; und
es wird ein Greifelement (12) bereitgestellt, welches aus einem kompressiblen Material hergestellt ist und eine durchgehende Öffnung zum Erfassen des freigelegten Bereichs der Faser (20) aufweist;
das Stützelement (10) wird aus einem harten, deformierbaren Metall hergestellt, welches einen niedrigen Elastizitätskoeffizienten besitzt;
für das Greifelement (12) wird ein elastisches Material ausgewählt, welches bezüglich des freigelegten Bereichs der Faser (20) einen hohen Reibungskoeffizienten aufweist;
das Greifelement (12) wird in dem Hohlraum des Stützelements (10) angeordnet; und
der freigelegte Bereich der Faser (20) wird durch das Greifelement (12) hindurchgefädelt;
mindestens ein Teilstück (22) des Stütz- bzw. Gehäuseelements (10), welches das Greifelement (20) umgibt, wird gekrimpt, um die dieses Teilstück (22) unelastisch zu verformen und dadurch das Greifelement (12) derart zusammenzupressen, daß es in einen festen elastischen Oberflächenkontakt mit dem freigelegten Bereich der zuvor in das Greifelement (12) eingefädelten Faser (20) gelangt, um diese Faser (20) in ihrer Position in der Anschlußanordnung (15) zu haltern, wobei dieses Verfahren durch den Schritt gekennzeichnet ist, daß eine Verstärkungsschicht (18) eines faseroptischen Kabels (17) von einem Endbereich der Faser (20) getrennt wird, um einen freigelegten Bereich derselben zu schaffen und um die Verstärkungsschicht (18) rund um ein Endstück (26) des Stützelements (10) herum zu positionieren, sowie durch den Schritt des Positionierens einer Hülse (14) rund um das Endstück (26) und den darüber liegenden Teil der Verstärkungsschicht (18) und schließlich durch den Schritt der Verformung der Hülse (14) nach innen zum Erfassen der Verstärkungsschicht (18) und des Endstücks (26) mit einer Kompressionskraft.

16. Verfahren nach Anspruch 15, bei dem ein weiterer Teil der Verstärkungsschicht (18) über die Hülse (14) gefaltet wird, bei dem ein weiterer ringförmiger Anschlußteil (38) rund um den weiteren Teil der Verstärkungsschicht (18), um die Hülse (14) und um das Endstück (26) herum positioniert wird und bei dem ein äußerer, ringförmiger Anschlußkörperteil (38) nach innen bezüglich der darin angeordneten Komponenten (18, 14, 26) unelastisch deformiert wird.

17. Verfahren nach Anspruch 15, bei dem die Faser (20) aus Glas hergestellt wird und bei dem das Greifelement (12) aus Polyethersulfon hergestellt wird.

18. Verfahren nach einem der Ansprüche 15 bis 17, bei dem das Stützelement (10) aus rostfreiem Stahl hergestellt wird.

## Revendications

1. Ensemble terminal (15) pour fibre optique, comprenant un élément élastique (12) de saisie de fibre formé d'un matériau ayant un coefficient de frottement élevé par rapport au matériau de la fibre optique (20) logée par un orifice central de l'élément (12) de saisie qui est en contact direct par sa surface avec la surface d'une partie exposée de la fibre optique (20), et comprenant en outre un élément métallique (10) de support qui entoure l'élément de saisie (12) et la partie exposée de la fibre optique (20) dans l'orifice central correspondant, l'élément de support (10) formant un anneau continu unitaire autour de l'élément de saisie (12) et de la partie exposée de la fibre étant formé d'un matériau dur ayant un faible coefficient d'élasticité et comprenant au moins une partie (22) qui est déformée de manière non élastique vers l'intérieur pour assurer la coopération par compression avec l'élément de saisie (12) et ainsi la compression de l'élément de saisie (12) afin qu'il coopère par saisie avec la partie exposée de la fibre optique (20) et retienne celle-ci en position prédéterminée par rapport à l'élément de support (10), l'ensemble terminal (15) étant caractérisé en ce qu'il constitue un premier ensemble terminal d'un connecteur (8, 46) de fibre optique qui forme une première surface de référence (32), en ce que l'élément de support (10) possède une seconde surface de référence (28) destinée à être en butée contre la première surface de référence (32), et en ce que la fibre (20) a une extrémité terminale séparée par une distance prédéterminée de la seconde surface de référence (28) de l'élément de support (22).

2. Ensemble selon la revendication 1, dans lequel la fibre optique (20) est formée de verre, et l'élément de saisie (12) est composé d'une polyéthersulfone.

3. Ensemble selon la revendication 1 ou 2, dans lequel l'élément de support (10) est composé d'acier inoxydable.

4. Ensemble selon la revendication 1, dans lequel l'élément de saisie (12) est un manchon unitaire continu entourant la partie exposée de la fibre (20), et l'élément de support (10) est une partie de manchon continu unitaire entourant l'élément de saisie (12).

5. Ensemble selon la revendication 1, dans lequel la fibre optique (20) est un élément d'un câble (17) à fibre optique dans lequel la fibre optique (20) est entourée pratiquement sur toute sa longueur d'un revêtement (16, 18, 19) comprenant une couche résistante, une partie au moins du revêtement (16, 18, 19) étant retirée de la fibre (20) pour la formation de la partie exposée de fibre (20) qui dépasse au-delà du revêtement (16, 18, 19).

6. Ensemble selon la revendication 5, dans lequel l'élément de support est une virole (10) ayant une partie radialement déformable (22) de tête comme partie déformable avec une surface de référence et de butée (28) à sa première extrémité et un tronçon de queue (26) destiné à être placé entre la fibre (20) et au moins une couche (18) de revêtement du revêtement (16, 18, 19).

7. Ensemble selon la revendication 6, comprenant en outre un organe déformable à manchon (14) placé autour de la couche (18) de revêtement au moins et du tronçon de queue (26).

8. Ensemble selon la revendication 7, caractérisé en outre en ce qu'il comporte un corps (36) ayant une cavité qui le traverse et une partie annulaire compressible (38) destinée à entourer la partie assemblée de queue (26), l'organe déformable (14) de manchon et la couche de revêtement (18) et à coopérer par compression avec eux.

9. Ensemble selon la revendication 8, dans lequel le corps externe (36) possède une surface supplémentaire de butée (32), qui est au contact de l'élément de support (10), le corps externe (36) formant un premier dispositif complémentaire qui positionne aussi un second élément complémentaire (34).

10. Ensemble selon la revendication 1, dans lequel le connecteur (8, 46) de fibre comporte un élément optique complémentaire supplémentaire (34) placé à une distance prédéterminée de la première surface de référence (32).

11. Ensemble selon la revendication 10, dans lequel l'élément complémentaire supplémentaire est une lentille (34).

12. Ensemble selon les revendications 1 et 10, dans lequel les distances prédéterminées sont pratiquement égales l'une à l'autre.

13. Ensemble terminal selon la revendication 1, dans lequel le connecteur (8, 46) de fibre optique comporte un ensemble terminal (8) de type mâle et un ensemble terminal (46) de type femelle ayant chacun une lentille (34), un ensemble terminal (46) ayant une partie de corps (manchon coupleur 52) destinée à être au contact du corps (tronçon d'extrémité mâle 35) de l'autre ensemble terminal (8) afin que les lentilles (34) soient alignées, si bien que la lumière quittant la fibre (20) d'un premier ensemble terminal (8) peut être projetée par la lentille (34) dans l'ensemble à lentille et à fibre (34, 20) de l'autre ensemble terminal (46).

14. Ensemble terminal selon l'une des revendications 1 à 12, dans lequel la fibre optique (20) est dépourvue de revêtement et de recouvrement.

15. Procédé de formation d'un ensemble terminal (15) destiné à une fibre optique (20) ayant des couches de revêtement (16, 18, 19), comprenant les étapes suivantes :
l'enlèvement des couches de revêtement (16, 18, 19) d'une partie d'extrémité de la fibre optique (20) pour la formation d'une partie exposée de la fibre optique,
la disposition d'un élément (10, 22, 26) de support de fibre ayant une cavité qui le traverse, et
la disposition d'un élément de saisie (12) formé d'un matériau compressible et ayant une ouverture destinée à coopérer avec la partie exposée de la fibre (20),
la disposition de l'élément de support (10) formé d'un métal déformable dur à faible coefficient d'élasticité,
la sélection d'un matériau élastique pour l'élément de saisie (12), ayant un coefficient de frottement élevé par rapport à la partie exposée de la fibre (20),
le positionnement de l'élément de saisie (12) dans la cavité de l'élément de support (10), et
l'enfilement de la partie exposée de la fibre (20) dans l'élément de saisie (12),
le sertissage d'une partie au moins (22) de l'élément (10) à boîtier de support autour de l'élément de saisie (12) afin que ladite partie (22) subisse une déformation non élastique et comprime ainsi l'élément de saisie (12) en contact élastique robuste, par une surface, avec une surface de la partie exposée de la fibre (20), enfilée au préalable à l'intérieur afin que la fibre (20) soit retenue en position dans l'ensemble terminal (15), le procédé étant caractérisé par une étape de séparation de la couche résistante (18) du câble (17) à fibre optique d'une partie d'extrémité de la fibre (20) pour la formation d'une partie exposée de fibre, et le positionnement de la couche résistante (18) autour d'une partie de queue (26) de l'élément de support (10), l'étape de positionnement d'un manchon (14) autour du tronçon de queue (26) et de la partie de revêtement de la couche résistante (18), et finalement l'étape de déformation vers l'intérieur du manchon (14) afin qu'il coopère par compression avec la couche résistante (18) sur le tronçon de queue (26).

16. Procédé selon la revendication 15, dans lequel une autre partie de la couche résistante (18) est repliée sur le manchon (14), et une partie terminale annulaire supplémentaire (38) est disposée autour de la partie supplémentaire de la couche résistante (18), du manchon (14) et du tronçon de queue (26), et la partie terminale externe (38) de corps est déformée de manière non élastique sur les éléments (18, 14, 26) disposés vers l'intérieur.

17. Procédé selon la revendication 15, dans lequel la fibre (20) est formée de verre, et l'élément de saisie (12) est composé d'une polyéthersulfone.

18. Procédé selon l'une des revendications 15 à 17, dans lequel l'élément de support (10) est composé d'acier inoxydable.
